# EUROPEAN PATENT APPLICATION

(11) **EP 3 182 355 A1**
(43) Date of publication of application: **21.06.2017**
(21) Application number: 15200599.7
(22) Date of filing: 16.12.2015
(51) Int. Cl.: G06Q 20/10, G06Q 20/12, G06Q 30/06, H04L 29/08

(54) **A METHOD AND SYSTEM OF PROCESSING A TRANSACTION ON A SERVER**

(71) Applicant: Mastercard International Incorporated, Purchase NY 10577 (US)
(72) Inventor: DOYLE, Eammon, Donnybrook Dublin (IE); ALLEN, John, Dublin 16 (IE)
(74) Representative: Richardson, Mark Jonathan

(57) **Abstract**

A server (122) for processing transactions within a Representational State Transfer (REST) architecture, the server comprising: an input for receiving requests (206, 208) from a client device (110); a processor arranged to store received requests in a data store (124); wherein, in response to receiving a request (218) to commit the transaction, the processor is arranged to retrieve stored requests from the data store and sequentially process the retrieved requests; and an output is arranged to output a transaction result to the client device

## Description

### TECHNICAL FIELD

The invention relates to processing a transaction using a server, particularly a server implementing a Representational State Transfer (REST) protocol. Aspects of the invention include a REST Application Program Interface (API), a REST server, a computer product, and a method of conducting a transaction.

### BACKGROUND

A transaction may be carried out for various reasons such as online shopping, during a bank account funds transfer or in the creation of a social media post. Such a transaction requires a client computer or device for a user to set up the transaction, and a transaction server for processing the transaction.

In the online shopping example, the transaction may be in the form of a purchase of goods from an online store. In this case, the client computer creates a cart and successively adds items to the cart for purchase. Once a desired number of items are located within the cart, the user adds their payment details, typically in the form of card details, to the transaction.

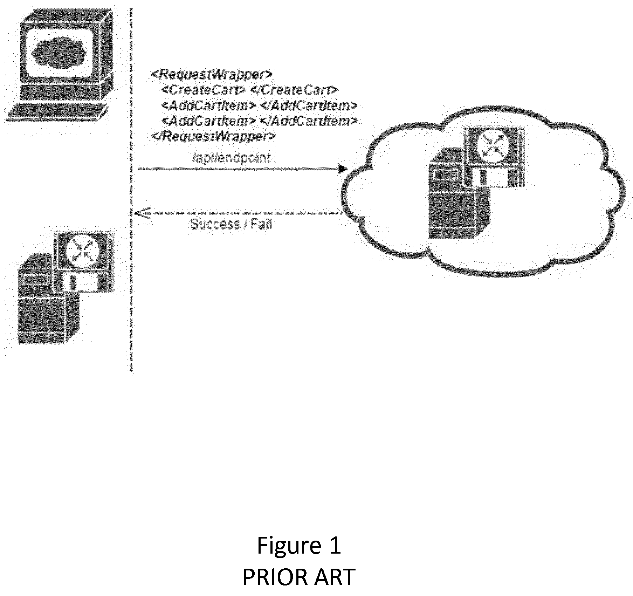

With reference to Figure 1, a transaction processed using a RPC/SOAP based server sets up the transaction, or shopping cart, at the client device. The entire request is then sent to the server. The server processes the transaction. An RPC/SOAP based server API is arranged to process each of the constituent items, or requests, within the transaction. If the transaction succeeds, for instance, all shopping items are in-stock/available and the payment details are accepted, the server returns an acceptance notification. However, if one of the items is not in stock or the payment details have not been accepted, the server returns a declined notification to the client computer. The entire transaction is then 'rolled back' or cancelled. If the client application wishes to retry the request the entire transaction must be resent to the server. Transactional behaviour is often desirable to prevent data being persistent when an entire sequence of events did not succeed.

In the example of a bank account transaction the elements of the funds transfer may comprise: (i) checking funds; (ii) withdrawing funds; (iii) transferring funds. In the event that the funds transfer fails then the withdraw funds request should be rolled back (in order to return the account to the position it was in at the start of the transaction).

In the example of a social media post then the elements of post creation may comprise: (i) creating the post; (ii) adding a description; (iii) adding a location; (iv) adding a photo. If either the adding of the location or photo fails then the transaction should be rolled back.

However, there is a trend to move away from XML-RPC/SOAP based servers towards Representational State Transfer (REST) servers. The rationale for the switch is multi factorial but there are many benefits with a REST based server which are not possible to realise with an RPC/SOAP based server.

These reasons include the fact that it is easier to document and understand a REST API. In particular, REST APIs manipulate resources and may use the same HTTP verbs used by web browsers and servers (e.g. the HTTP method is used to define the operation PUT=Create, POST=Update, DELETE=Delete, GET=Get). This is easier to document than having to compile a list of operations such as CreateCart, UpdateCart, DeleteCart as would be the case if using a RPC protocol. In addition, there is a performance improvement marshaling/unmarshalling a REST based server than there is a RPC/SOAP based server. Furthermore, it's easier for clients to consume REST APIs than create an XML request for XML/SOAP.

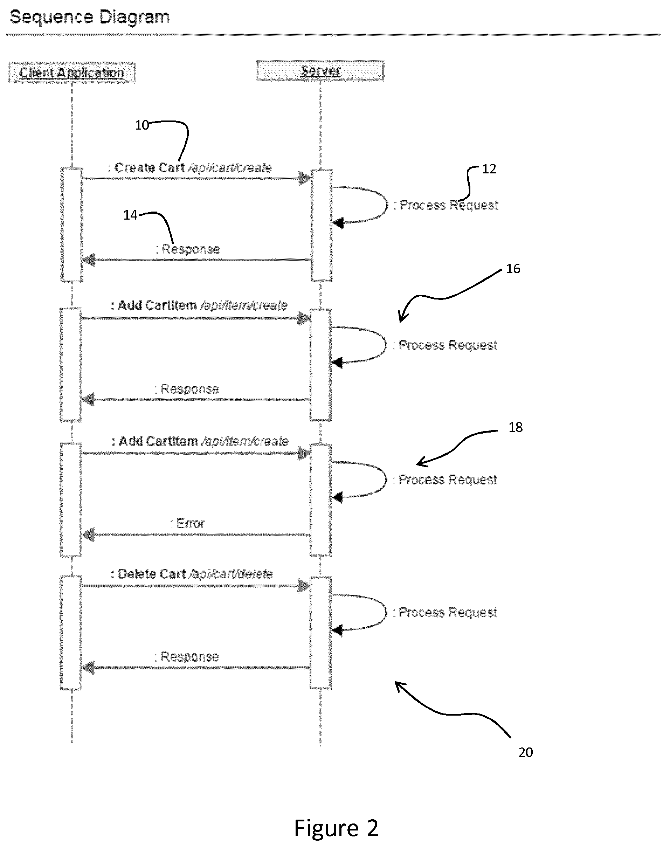

With reference to Figure 2, a transaction process is shown which is executed on a REST based server. A user initiates the transaction in this scenario by creating a shopping cart 10. The electronic device sends the request to create the shopping cart to the server in JSON format (it is noted however that an alternative message format may be used such as XML since the message format is independent from using REST). In response, the server processes the request 12 in the form of a REST API. The REST API is configured to respond 14 to the electronic device by advising that the shopping cart has been set up. The user then adds various items to the cart 16, 18, each item sent from the electronic device to the server in the form of an JSON request. Each request is processed in turn by the server and approved or declined individually. Finally, a payment is requested in the same way. If the payment is accepted then the transaction is completed. However, if the payment is declined, all of the items will remain in the shopping cart and will thus persist at the server. This is not beneficial since a user may not wish to re-enter their payment details. In this case, the shopping items will remain in the server as executed requests, preventing any further clients from purchasing those goods. Alternatively, if the error relates to an inventory item, which is out of stock, the selection of the other items may be impacted. In such an event, in order to resubmit the shopping cart the user would not be able to just add the replacement items but would have to manually delete all of the outdated items and the shopping cart 20.(Note: for the avoidance of doubt it should be appreciated that the word "transaction" is being used in the above scenario in the sense of a RESTful transaction rather than in its commerce sense).

Of course, the aforementioned description of a shopping cart is for illustrative purposes only and the same transactional steps may be used in other scenarios. However, it can be seen that regardless as to the specific type of transaction being undertaken, transactional behaviour is not supported by the REST based server.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### SUMMARY OF THE INVENTION

According to an aspect of the invention there is provided a server for processing transactions within a Representational State Transfer (REST) architecture, the server comprising: an input for receiving requests from a client device; a processor arranged to store received requests in a data store; wherein, in response to receiving a request to commit the transaction, the processor is arranged to retrieve stored requests from the data store and sequentially process the retrieved requests; and an output is arranged to output a transaction result to the client device.

Accordingly, the server provides an architecture within which all requests relating to a transaction are stored until the transaction is committed at which point the stored transactions are retrieved and processed sequentially.

Optionally, the processor comprises a Representational State Transfer (REST) Application Program Interface (API).

Preferably, prior to receiving requests from the client device, the input is arranged to receive a Create transaction message from the client device.

In response to receiving a Create transaction message, the processor is preferably arranged to generate a transaction identifier. The output may be arranged to output a Create Transaction Document (CTD) message to the data store, the CTD request comprising the transaction identifier. The output may further be arranged to output the transaction identifier to the client device.

The processor is preferably arranged to examine received requests to determine the presence of the transaction identifier within the request. Optionally, requests are in the form of an HTTP request, the HTTP request comprising a header portion and a body portion and the processor is arranged to examine the header portion to determine the presence of the transaction identifier.

Optionally, the processor is arranged to roll-back the transaction if an error occurs when processing any of the requests.

Preferably, the processor is arranged to re-process the transaction automatically in response of a server failure when processing the transaction.

Preferably, the processor is arranged to send a status update in response to receiving each request. The status update preferably comprises an HTTP status 100 response.

The server according to the above aspect of the present invention may process online shopping commercial exchanges. In such embodiments, the request optionally is a request to initiate a shopping cart. One of such requests is preferably an inventory item. Optionally, one of the requests or the request to commit the transaction includes payment details of a client.

According to an aspect of the present invention there is provided a Representational State Transfer Application Program Interface (REST API) for installation onto the server according to the above aspect of the invention, the REST Server arranged to; receive requests from a client device; store received requests in a data store; wherein, in response to receiving a request to commit the transaction, retrieve stored transaction requests from the data store and sequentially process the retrieved transaction requests; and output a transaction result to the client device.

The server may preferably be arranged to be in communication with a data store for storing the plurality of requests.

According to an aspect of the present invention there is provided a method of conducting a transaction within a Representational State Transfer (REST) architecture comprising; receiving transaction requests from a client device; storing received transaction requests in a data store; in response to receiving a request to commit the transaction, retrieving stored transaction requests from the data store and sequentially processing the retrieved transaction requests; and outputting a transaction result to the client device.

A non-transitory computer-readable storage medium storing executable computer program instructions may be configured to implement the above method. The invention extends to a computer storage medium comprising computer-readable instructions for a computer to carry out the above method.

### BRIEF DESCRIPTION OF THE DRAWINGS

One or more embodiments of the invention will now be described, by way of example only, with reference to the accompanying drawings, in which:
Figure 1 shows a schematic of a transaction using an XML request from a client device and a REST server for processing the transaction as known from the prior art;
Figure 2 shows a sequence diagram of a transaction using a JSON request from a client device and a REST server for processing the transaction;
Figure 3 shows a schematic of a transaction using an XML request from a client device and a REST server according to an embodiment of the present invention for processing the transaction; and
Figure 4 shows a sequence diagram of the transaction from Figure 3.

### DETAILED DESCRIPTION

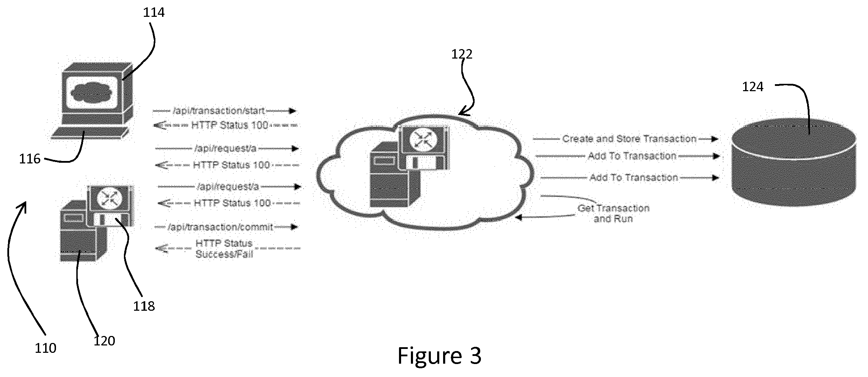

With reference to Figure 3, a transaction is carried out between a client device 110 and a server 112 in accordance with an embodiment of the invention.

The client device 110 is an electronic device which is shown, by way of illustrative example only, as a desktop computer. However, it is to be appreciated that a desktop computer is not the only form of client device 110 which can realise this transaction. Other forms of client device 110 may also be used in embodiments of the present invention, such as portable electronic devices, for instance, a laptop computer, a smartphone, or a tablet computer.

The desktop computer 110 includes a monitor 114 for displaying information to a user and a keyboard 116 for receiving inputs from the user. A mouse may also be present though not shown in Figure 3. The computer 110 also includes a memory unit 118 shown in Figure 3 as a removable disk. However, the memory unit 118 can take other forms of memory unit such as non-volatile memory. The desktop computer 110 also includes a processor and a Random Access Memory (RAM) unit located within a desktop tower 120.

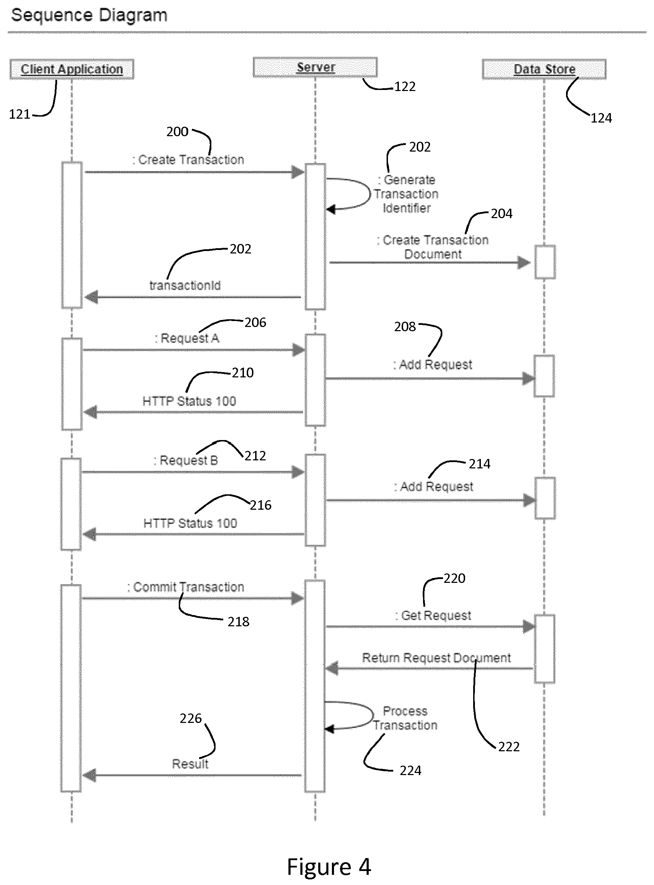

A client application (121 in Figure 4) is stored on the memory unit 118 of the computer 110 and is able to process transactions input by a user to the keyboard 116. As will be described in more detail below, the client application allows a user to purchase items, for instance, from an online website. An illustrative transaction would involve a user initiating a shopping cart, adding various items for purchase to the shopping cart, inputting their payment details for processing the transaction and finally executing the transaction. The client application is arranged to send the transaction particulars as JSON requests to the REST based server.

The desktop tower 120 includes a communications port for communicating with a transaction server 122, which server 122 is a cloud based server. Any internet based communications medium, or telecommunications based medium, such as a mobile phone network, can be used to link the client device 110 to the transaction server 122. In use, as described below, the client application 121 interacts over the communications medium with the transaction server 122 in order to process a transaction.

The transaction server 122 comprises a REST based server and REST based applications, or REST APIs. Numerous APIs are implemented on the server, each for supporting a request type. The REST Server in this case is able to process the transaction sent by the client device, in this case the desktop computer 110. The actual processing steps are described in more detail below though in principle, the REST transaction requests are successively addressed by responding to the client device with an Hypertext Transfer Protocol (HTTP) status 100 update. In response to receipt of each request, the requests are individually stored and finally processed as a transaction bundle before success or failure of the transaction is communicated to the user via the desktop and in particular the monitor 114.

The transaction server 122 is linked to a data store 124, again in the form of a nonvolatile memory unit or device. The memory component is able to store the transaction requests and group them according to the transaction identifier (ID) to which they relate, for instance which shopping cart each item belongs to. These commands are stored as electronic data in the data store 124 and are able to be loaded subsequently for processing the transaction bundle.

Processing of a transaction using the aforementioned hardware is best described by way of example to a real world commercial transaction that a user may wish to undertake. One illustrative transaction is of the form of a user purchasing goods or services online using a shopping cart.

With reference to Figure 4, a user firstly initiates a transaction 200 by creating a shopping cart via the client application 121. A create transaction message 200 is sent to the server 122, which server 122 receives the create transaction message 200 using a REST API and processes the message 200 by generating a transaction identifier 202 in response. A create transaction document message 204 is generated by the server 122 and attributed a unique identification number. The server then sends the create transaction document message 204, encoded with the unique number, to the data store 124 for storage. Subsequent to creating the transaction document 204 on the data store 124, the server 122 returns the transaction identifier 202 to the client application 121. All subsequent transaction requests relating to this transaction will be sent to the server with reference to the transaction identifier 202.

After initiation of the shopping cart, the user then selects an inventory item for purchase by adding the item to the shopping cart. In response to adding the item to the shopping cart, the client application sends a request A 206 to the server 122. The REST API on the server 122 adds the request 208 to the data store 124. In particular, the request on the data store includes the unique number specific to the present transaction. In addition, the REST API returns a status update 210 to the client application 121. This status update 210 is an HTTP Status 100 update and serves to acknowledge that the server has received the transaction request A 206. The client application 121 displays the status to the user as the item being successfully added to the shopping cart.

A user can then add a further inventory item to the shopping cart by selecting the item on the website. In response to selecting the inventory item, the client application 121 sends a request B 212 to the server 122. The REST API receiving the request 212 processes it by adding the request 214 to the data store 124. Again, the addition of the request 214 includes the unique number associated with the transaction identifier. As with the previous request, the server 122 returns a status update 216 to the client application 121. Again, the status update is an HTTP Status 100 update. This update serves to acknowledge that the server has received the request to add the inventory item to the shopping cart.

Further inventory items may be added to the shopping cart in a similar fashion leading to the client application 121 sending similar requests to the server 122. Once the desired number of inventory items has been added, the user will add their payment details to complete the transaction. These account details are likely to be payment card details, such as a debit or credit card, though could also be any e-payment account usable for such transactions. After inputting the account details, the user commits the transaction, e.g. by clicking on the mouse, entering a key to the keyboard, selecting a "Pay" button on a touchscreen etc. In response, the client application 121 sends a request to the server 122 to commit the transaction 218. The payment details may be processed as part of a separate transaction request (for instance a transaction C which is not shown in Figure 4) or as part of the transaction commitment request. The REST API of the server 122 communicates with the data store 124 to obtain all requests 220 relating to the transaction. The data store 124 returns a request document 222 including all requests relating to the current transaction since all of those requests include reference to the unique number.

Once the server 122 has the request document 222, the REST API processes the bundle of requests in a single transaction 224. After processing the transaction 224, the server 122 returns the result 226 of the transaction to the client application. The client application therefore receives an indication that the transaction has either been processed successfully or that there has been an error with the transaction.

Once the request to commit the transaction is made to the server the outcomes are either a successful transaction or a rollback of the transaction. In the event of a rollback no data is persisted on the database 124.

An event whereby a transaction error occurs may be where an inventory item relating to one of the requests (A or B) does not exist. An inventory item may not exist where the item is out of stock. In this case, none of the other requests; which in this case includes the creation of the cart, the transaction commitment (including the payment details), and the other inventory item, are persisted since they have been loaded from the data store 124. Non-persistence of all of the requests is known as 'roll-back'. This is not possible with the sequence diagram shown in Figure 2 for a REST based server using a conventional REST API since each request is processed individually and thus only the failed requests are not persisted whereas successfully processed requests are persisted. This roll-back of all requests in response to failure of one request is desirable for transaction type behaviour for numerous reasons. Firstly, a user may not wish to complete the entire transaction if one item is out of stock but the others are available. In this case, roll-back of the entire transaction allows other users to access those items from the inventory during an otherwise overlapping purchase. From a user's perspective, using the conventional REST sequence of Figure 2 may result in them having to delete the shopping cart manually in order to add a replacement item. This manual re-addition of the individual requests to the shopping cart, such as re-adding inventory items and/or payment details, is desirable from a consumer perspective since one very important item being out of stock may affect their selection of the other items within the shopping cart. Thus, these other 'impacted' items would require a user to manually delete the items from the cart only to re-add replacement items subsequently if no roll-back feature is included.

There may be some instances where a technical failure may result in the transaction failing. For instance, a server error may result in the transaction not being executed to completion. In the event of such a technical error, the transaction may be completed by re-submitting the request automatically. This automatic re-submission can be carried out by the REST API such that the user does not need to become involved in the re-submission. For instance, a status update may be sent to the user in this case advising of the current attempt number out of a possible maximum. Alternatively, the REST API may send a message to the client application 121 advising of the error but inviting the user to re-submit the request by clicking a button on the mouse for instance. In this way, the user would not have to duplicable the previous shopping cart and re-add all of the same items in the event of a technical error which is out of the user's control.

As the person skilled in the art will appreciate, modifications and variations to the above embodiments may be provided, and further embodiments may be developed, without departing from the spirit and scope of the invention. Reference to standards and proprietary technologies are provided for the purpose of describing effective implementations, and do not limit the scope of the invention.

## Claims

1. A server (122) for processing transactions within a Representational State Transfer (REST) architecture, the server comprising:
an input for receiving requests (206, 208) from a client device (110);
a processor arranged to store received requests in a data store (124);
wherein, in response to receiving a request (218) to commit the transaction, the processor is arranged to retrieve stored requests from the data store and sequentially process the retrieved requests; and
an output is arranged to output a transaction result to the client device.

2. A server as claimed in Claim 1, wherein the Processor comprises a Representational State Transfer (REST) Application Program Interface (API).

3. A server as claimed in Claim 1 or Claim 2, wherein, prior to receiving requests from the client device, the input is arranged to receive a Create transaction message from the client device (110).

4. A server as claimed in Claim 3, wherein, in response to receiving a Create transaction message (200), the processor is arranged to generate a transaction identifier.

5. A server as claimed in Claim 4, wherein the output is arranged to output a Create Transaction Document (CTD) message to the data store (124), the CTD request comprising the transaction identifier.

6. A server as claimed in Claim 4 or Claim 5, wherein the output is arranged to output the transaction identifier to the client device.

7. A server as claimed in Claim 6, wherein the processor is arranged to examine received requests to determine the presence of the transaction identifier within the request.

8. A server as claimed in Claim 6 or Claim 7, wherein requests are in the form of an HTTP request, the HTTP request comprising a header portion and a body portion and the processor is arranged to examine the header portion to determine the presence of the transaction identifier.

9. A server as claimed in any preceding claim wherein the processor is arranged to roll-back the transaction if an error occurs when processing any of the requests.

10. The server as claimed in any preceding claim wherein the processor is arranged to re-process the transaction automatically in response of a server failure when processing the transaction.

11. The server as claimed in any preceding claim wherein the processor is arranged to send a status update in response to receiving each request.

12. A Representational State Transfer Application Program Interface (REST API) for installation onto the server (122) of any preceding claim, the REST Server arranged to;
receive requests (206, 212)from a client device;
store received requests (208, 214) in a data store (124);
wherein, in response to receiving a request to commit the transaction, retrieve stored transaction requests from the data store (124) and sequentially process the retrieved transaction requests; and
output a transaction result to the client device (110).

13. A method of conducting a transaction within a Representational State Transfer (REST) architecture comprising;
receiving transaction requests (206, 208) from a client device;
storing received transaction requests (208, 214) in a data store (124);
in response to receiving a request to commit the transaction, retrieving stored transaction requests (220) from the data store and sequentially processing (224) the retrieved transaction requests; and
outputting a transaction result (226) to the client device.

14. A computer storage medium comprising computer-readable instructions for a computer to carry out the method as claimed in Claim 13.

15. A non-transitory computer-readable storage medium storing executable computer program instructions to implement the method as claimed in Claim 13.
